(19) Europäisches Patentamt / European Patent Office / Office européen des brevets

(11) **EP 1 414 182 B1**

(12) **FASCICULE DE BREVET EUROPEEN**

(45) Date de publication et mention
de la délivrance du brevet:
**27.06.2007   Bulletin 2007/26**

(51) Int Cl.:
*H04L 9/30* *(2006.01)*      *G06F 7/72* *(2006.01)*

(21) Numéro de dépôt: **03300126.4**

(22) Date de dépôt: **19.09.2003**

(54) **Masquage de données décomposées dans un système de résidus**

Verstecken von in einem Restklassensystem dargestellten Daten

Hiding of data decomposed in a residue system

(84) Etats contractants désignés:
**DE FR GB IT**

(30) Priorité:   **20.09.2002   FR 0211671**

(43) Date de publication de la demande:
**28.04.2004   Bulletin 2004/18**

(73) Titulaire: **ST MICROELECTRONICS S.A.**
**92120 Montrouge (FR)**

(72) Inventeur: **Liardet, Pierre-Yvan**
**13790 Peynier (FR)**

(74) Mandataire: **de Beaumont, Michel**
**1bis, rue Champollion**
**38000 Grenoble (FR)**

(56) Documents cités:
**WO-A-99/35782**          **FR-A- 2 799 851**
**US-A- 5 991 415**

• **BAJARD J-C ET AL: "Modular multiplication and base extensions in residue number systems" PROCEEDINGS 15TH IEEE SYMPOSIUM ON COMPUTER ARITHMETIC. VAIL. CO, JUNE 11 - 13, 2001, IEEE SYMPOSIUM ON COMPUTER ARITHMETIC, US, LOS ALAMITOS, IEEE COMP. SOC, US, 11 juin 2001 (2001-06-11), pages 59-65, XP010547810 ISBN: 0-7695-1150-3**
• **YENS-M ET AL: "RSA speedup with residue number system immune against hardware fault cryptanalysis" LECTURE NOTES IN COMPUTER SCIENCE, SPRINGER VERLAG, NEW YORK, NY, US, vol. 2288, 7 décembre 2001 (2001-12-07), pages 397-413, XP002233842 ISSN: 0302-9743**

EP 1 414 182 B1

**Description**

La présente invention concerne les traitements algorithmiques effectués sur des données numériques manipulées par un microprocesseur ou un circuit intégré. L'invention concerne plus particulièrement les traitements opérés sur des données numériques dans des applications cryptographiques de chiffrement ou d'authentification mettant en oeuvre des algorithmes dits sécurisés. Dans de telles applications, les données manipulées par les algorithmes et sur lesquels sont effectuées des opérations de base (additions, multiplications) doivent pouvoir être protégées contre le piratage, c'est-à-dire des attaques extérieures visant à découvrir des données secrètes et/ou l'algorithme de calcul.

Par exemple, lorsqu'un circuit intégré (qu'il s'agisse d'un microprocesseur ou d'un opérateur en logique câblée) exécute un calcul sur des données, ce calcul influe sur sa consommation. Une analyse de la consommation du circuit intégré pendant l'exécution de l'algorithme peut permettre à un pirate de découvrir les données traitées ou l'algorithme qui les exécute. De telles attaques par analyse de la consommation d'un circuit intégré manipulant des données sont connues sous les dénominations SPA (Single Power Analysis) ou DPA (Differential Power Analysis).

Un exemple d'application de la présente invention concerne les procédures d'authentification de fichiers numériques (par exemple, audio) ou d'éléments de traitement électroniques (par exemple, cartes à puces) afin de valider l'autorisation de l'utilisateur à accéder à des informations (par exemple, données audio ou données sur la puce).

Pour des questions de rapidité de calcul et de facilité d'implémentation des algorithmes, les nombres sur lesquels on souhaite effectuer des opérations par des moyens de calculs automatiques peuvent être décomposés par application du théorème dit des restes chinois (CRT).

Le théorème des restes chinois, appliqué à des nombres entiers, peut s'exprimer de la façon suivante. Pour toute suite de nombres $m_i$ (i compris entre 1 et n) premiers entre eux et pour toute suite d'entiers $x_i$, il existe un unique nombre entier x inférieur au produit de la suite de nombres premiers de la base de décomposition, tel que pour tout i:

$$x_i = x \text{ modulo } m_i.$$

Cela signifie que, pour une suite finie de nombres $m_i$, premiers entre eux, on peut représenter tout nombre inférieur au produit de cette suite finie de manière unique, en une suite d'entiers positifs en nombre égal au nombre d'éléments de la suite de nombres premiers entre eux. Cette représentation est appelée la représentation par système de résidus (Residue Number System, RNS).

En d'autres termes, pour tout nombre entier x compris entre 0 et M, où M représente le produit des nombres premiers entre eux $m_i$ de la base de décomposition, on peut écrire :

$$x = \left| \sum_{i=1}^{n} x_i \cdot m_i \cdot \left| M_i^{-1} \right|_{m_i} \right|_M, \qquad \text{(formule 1)}$$

avec $M = \prod_{i=1}^{n} m_i$, $M_i = \dfrac{M}{m_i}$, et où $\left| M_i^{-1} \right|_{m_i}$ est l'inverse du nombre $M_i$ modulo $m_i$. La notation $|\cdots|_M$ est utilisée pour désigner un nombre (ici, le résultat de la somme) modulo M.

L'intérêt des systèmes de résidus est que les opérations telles que l'addition, la soustraction et la multiplication sont simplifiées et peuvent être exécutées dans des architectures parallèles. En fait, les opérations élémentaires peuvent être effectuées sur chaque entier de la décomposition du nombre à calculer. Le résultat est ensuite obtenu en appliquant la formule 1 ci-dessus au résultat.

Par exemple, deux nombres x et y sur lesquels on souhaite effectuer un calcul sont décomposés en utilisant la même base de nombres premiers entre eux. Par suite, les opérations d'addition, de soustraction et de produit sont effectuées sur les éléments de la décomposition, modulo les nombres premiers correspondants. On obtient un ensemble de valeurs dans la base de décomposition, que l'on recombine pour obtenir le résultat.

L'intérêt majeur dans une exécution automatique des calculs au moyen de circuits intégrés est que les opérations individuelles modulo les nombres de la base de décomposition concernent des nombres ayant toujours la même taille, ce qui permet l'exécution de ces calculs au moyen d'architectures parallèles et dans une même durée.

Toutefois, un inconvénient est que les nombres traités sont plus facilement détectables par les différentes attaques, notamment, par analyse de la consommation du circuit intégré.

Classiquement, pour masquer le traitement d'un ou plusieurs nombres, on combine ces nombres avec des quantités aléatoires, avant le traitement algorithmique. Une telle solution est décrite, par exemple, dans le document US-A-5 991 415.

Un inconvénient est que cela modifie le ou les nombres traités, ce qui impose d'effectuer une modification inverse en fin de traitement pour récupérer le résultat attendu.

Un autre inconvénient est que le masquage accroît la complexité du traitement ainsi que la durée du calcul entier.

Plus généralement, le système des résidus appliquant le théorème des restes chinois s'applique lorsque les opérations et les opérandes sont celles d'un corps fini quelconque. Par exemple, ce système s'applique à un corps de polynômes modulo un polynôme irréductible, ou au corps des entiers modulo un nombre premier.

La présente invention vise à proposer une solution pour masquer l'exécution de calculs algorithmiques utilisant des représentations par système de résidus.

L'invention vise plus particulièrement à proposer une solution de masquage qui soit indépendante de l'algorithme mis en oeuvre, c'est-à-dire qui puisse s'appliquer quels que soient les calculs exécutés sur les nombres décomposés.

L'invention vise également à proposer une solution qui ne nuit pas à la rapidité d'exécution de l'algorithme et, notamment, qui n'ajoute pas d'étape de calcul supplémentaire.

Pour atteindre ces objets et d'autres, la présente invention prévoit un procédé de masquage de données numériques manipulées par un algorithme et décomposées par un système de résidus à partir d'une base finie de nombres ou de polynômes premiers entre eux, consistant à rendre variable la base de décomposition.

Selon un mode de mise en oeuvre de la présente invention, la base de décomposition est choisie dans une table mémorisée d'ensembles de nombres ou de polynômes premiers entre eux.

Selon un mode de mise en oeuvre de la présente invention, l'ensemble de nombres ou de polynômes premiers entre eux, servant à la décomposition par système de résidus, est choisi aléatoirement dans la table mémorisée, à chaque nouvelle application de l'algorithme.

Selon un mode de mise en oeuvre de la présente invention, la base de décomposition est calculée par un générateur pseudo-aléatoire.

Selon un mode de mise en oeuvre de la présente invention, la base est choisie pour être compatible avec les longueurs des nombres ou polynômes traités par l'algorithme.

Selon un mode de mise en oeuvre de la présente invention, le procédé est appliqué à des données d'entrée déjà décomposées par un système de résidus dans une base d'origine, les données d'entrée subissant un changement de base de décomposition et le résultat fourni par l'algorithme subissant, de préférence, une transformation inverse vers ladite base d'origine.

Selon un mode de mise en oeuvre de la présente invention, le procédé est appliqué à des données d'entrée hon encore décomposées.

Selon un mode de mise en oeuvre de la présente invention, un ou plusieurs changements de base de décomposition sont effectués pendant l'exécution de l'algorithme.

L'invention prévoit également un circuit de traitement algorithmique de données décomposées par un système de résidus à partir d'une base finie de nombres ou de polynômes premiers entre eux, comportant un circuit de sélection ou de génération, et de mémorisation temporaire de ladite base.

Selon un mode de réalisation de la présente invention, le circuit comporte un élément de stockage d'une table de bases de nombres ou de polynômes premiers entre eux, ledit circuit de sélection choisissant, à chaque application de l'algorithme, une base dans ladite table.

Selon un mode de réalisation de la présente invention, le circuit comporte un élément de vérification de conformité, entre la base sélectionnée pour application des décompositions par système de résidus et les circuits de calcul du circuit exécutant l'algorithme.

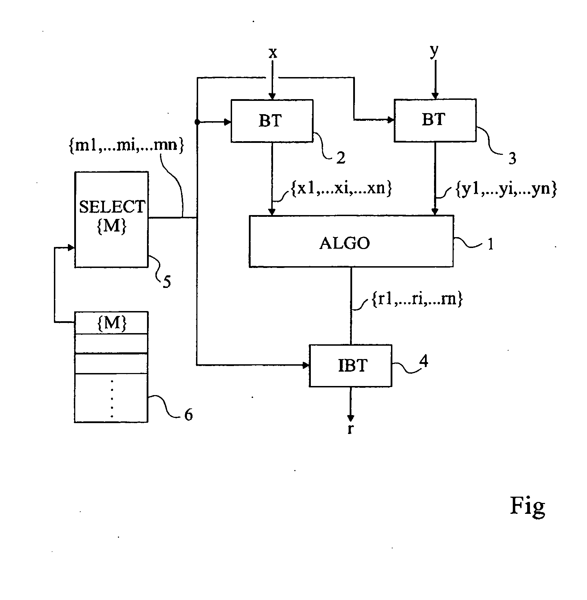

Ces objets, caractéristiques et avantages, ainsi que d'autres de la présente invention seront exposés en détail dans la description suivante de modes de réalisation particuliers faite à titre non-limitatif dans la figure annexée qui illustre, sous forme de blocs et de façon très schématique, un mode de mise en oeuvre du procédé de masquage selon l'invention.

Par souci de clarté, l'invention sera exposée ci-après en relation avec une application à des nombres entiers décomposés à partir d'une base de nombres premiers entre eux. On notera toutefois qu'elle s'applique plus généralement à une décomposition de polynômes d'un corps modulo un polynôme irréductible à partir d'une base de polynômes premiers entre eux.

Une caractéristique de la présente invention est de modifier la base de décomposition/recombinaison des nombres entiers traités par un algorithme en application d'un système de résidus.

Selon l'invention, on change la représentation par le système de résidus, de préférence, à chaque fois qu'un nouveau groupe de nombres entiers est soumis à une décomposition pour un traitement algorithmique, ou pour une opération de calcul.

Ainsi, à la différence des solutions classiques de masquage de calcul par l'introduction de nombres aléatoires dans les nombres traités pour modifier ceux-ci, l'invention prévoit de rendre variable la représentation du nombre, celui-ci restant inchangé.

Un avantage important par rapport à l'introduction d'un nombre aléatoire est que la récupération du résultat attendu ne nécessite pas de calcul supplémentaire par rapport à l'application classique des représentations par système de résidus. En effet, seule la base de décomposition doit être indiquée au processus de recombinaison classique. En d'autres termes, on rend la base de décomposition variable.

Un autre avantage est que la durée de calcul n'est que peu augmentée par le masquage. La seule durée supplémentaire correspond au changement de la base de décomposition (lecture en mémoire), ce qui est négligeable par rapport aux calculs supplémentaires requis, au moins en début et en fin d'algorithme, pour combiner les nombres (ou les polynômes) traités avec un nombre aléatoire.

La figure annexée représente, sous forme de blocs, un exemple d'application d'une représentation par système de résidus à un algorithme 1 (ALGO) devant traiter, par exemple, au moins deux nombres entiers x et y et fournir au moins un résultat r.

Comme précédemment, pour faciliter les calculs, l'algorithme 1 exécute des opérations élémentaires sur chaque élément de décompositions $\{x_1, ..., x_i, ..., x_n\}$, $\{y_1, ..., y_i, ..., y_n\}$ des nombres x et y dans la base de décomposition par un système de résidus. Cette décomposition s'effectue (blocs 2 et 3, BT) avant l'introduction des nombres dans l'algorithme 1 proprement dit, à partir d'une base $\{m_1, ..., m_i, ..., m_n\}$ de nombres premiers entre eux, où n représente le nombre d'éléments de la base qui correspond au nombre d'éléments des suites de décomposition des nombres x et y.

L'algorithme 1, c'est-à-dire le bloc de traitement, fournit le résultat sous la forme d'une suite de nombres entiers $(r_1, ..., r_i, ..., r_n)$. Cette suite de n nombres est, dans cet exemple, recombinée (bloc 4, IBT) à partir de la même base $\{m_1, ..., m_i, ..., m_n\}$ de nombres premiers pour obtenir le résultat r.

Selon la présente invention, la base de décomposition $\{m_1, ..., m_i, ..., m_n\}$ est fournie par un élément 5 (SELECT {M}) de sélection et de mémorisation temporaire de la suite de nombres (ou de polynômes) premiers entre eux de décomposition par système de résidus. Cette sélection est, de préférence, changée à chaque application de l'algorithme 1, c'est-à-dire à chaque nouvelle introduction de grandeurs x, y (à chaque fois qu'il est nécessaire de décomposer des valeurs à prendre en compte par le calcul algorithmique pour l'obtention d'un résultat recomposé sur la base du même système de résidus). Si plus de deux nombres sont utilisés, ou si d'autres nombres interviennent à d'autres moments dans l'algorithme, on veillera à maintenir une même base pour tous les nombres.

Selon la provenance et la destination des données d'entrée de l'algorithme, les décompositions 2 et 3 peuvent être faites plus en amont, par exemple, si les données d'entrées proviennent de sorties d'un traitement par système de résidus. De même, le ou les résultats peuvent être fournis sous forme décomposée. Cela sera notamment le cas si l'algorithme dont l'exécution est masquée par l'invention est imbriqué dans une chaîne de traitement utilisant un système de résidus. Dans ce cas, les blocs 2, 3 et 4 exécutent des changements de base pour convertir les données d'entrée représentées dans une certaine base de décomposition en une base sélectionnée par l'élément 5 et pour restituer les données de sortie dans la base d'entrée.

Selon un autre mode de réalisation, des changements de base (additionnels ou non) peuvent intervenir en cours de l'algorithme. Ces changements sont alors sélectionnés au moyen de bloc 5 de la même façon que la transformation initiale. La restitution des nombres traités est alors obtenue par une seule transformation inverse effectuée (pas nécessairement en fin d'algorithme) selon la dernière base utilisée.

Plusieurs méthodes peuvent être utilisées pour sélectionner la base de décomposition ou pour changer de base en cours de calcul.

Selon un premier mode de mise en oeuvre, une table 6 d'ensembles {M} de nombres premiers entre eux est stockée dans un élément de mémorisation et on prévoit une sélection (par exemple, aléatoire) d'un des ensembles de la table mémorisée à chaque nouvelle décomposition, chaque ensemble représentant une base dans le système des résidus.

Selon un autre exemple de mise en oeuvre, on utilise un générateur de suites de nombres premiers entre eux qui génère (à la volée), de façon pseudo-aléatoire pour être compatible avec l'architecture parallèle du circuit exécutant l'algorithme 1, la base de décomposition $\{m_1, ..., m_i, ..., m_n\}$.

On notera que, pour que la décomposition ou le changement de base soit différent d'un calcul à un autre, il suffit que deux nombres de la base de décomposition choisie soient inversés, c'est-à-dire placés dans un ordre différent dans la suite des nombres de la base. Il est par conséquent particulièrement simple de faire varier la décomposition de n'importe quelle donnée numérique d'entrée tout en restant compatible avec un même circuit de traitement par architecture parallèle. Il suffit de modifier l'aiguillage des données décomposées en fonction de l'ordre des nombres (ou des polynômes) premiers entre eux de la base. Le mode de transformation de la base par changement d'ordre des nombres de celle-ci conditionne cependant la qualité du caractère aléatoire de la représentation des nombres dans le système des résidus.

Un avantage de la présente invention est que sa mise en oeuvre est indépendante de l'algorithme exécuté.

Un autre avantage de l'invention est qu'elle ne nécessite pas de recalcul spécifique à l'issue de l'algorithme pour récupérer le nombre attendu. En effet, dans toute structure à traitement algorithmique par application du théorème des restes chinois, une étape de recombinaison à partir de la base de nombres ou polynômes premiers entre eux est prévue pour restituer le résultat.

Un exemple d'algorithme où l'invention s'applique est l'algorithme de type RSA tel que décrit dans l'article "Modular multiplication and base extension in residue number systems" de J.-C. Bajard, L.-S. Didier et P. Kornerup, publié par N. Burgess, rapport de Arith 15, 15ème symposium IEEE sur l'arithmétique informatique, Vail, Colorado, USA, Juin 2001, pages 59-65.

Bien entendu, la présente invention est susceptible de diverses variantes et modifications qui apparaîtront à l'homme de l'art. En particulier, l'invention s'applique quel que soit le nombre de données d'entrée de l'algorithme et quel que soit le nombre de données fournies par cet algorithme, pourvu que toutes les données d'entrée soient décomposées à partir de la même base de nombres ou polynômes premiers entre eux.

De plus, le choix de la taille des ensembles de nombres ou polynômes premiers constituant la base de décomposition dépend de l'application et est choisi de façon classique.

En outre, la réalisation pratique de l'invention à partir des indications fonctionnelles données ci-dessus est à la portée de l'homme du métier en utilisant des moyens connus. La mise en oeuvre de l'invention peut être logicielle ou par des machines d'états en logique câblée. Par exemple, mis en oeuvre de façon matérielle, les blocs 2 et 3 de décomposition ou de changement de base des données d'entrée peuvent être constitués d' un ou plusieurs circuits selon que le changement de base est effectué en parallèle ou successivement pour les différentes données d'entrée.

**Revendications**

1. Procédé de masquage de données numériques manipulées par un algorithme (1) et décomposées par un système de résidus à partir d'une base finie de nombres ou de polynômes premiers entre eux, **caractérisé en ce qu'**il comporte une étape de modification de la base de décomposition des données dans le système de résidus d'une exécution à une autre de l'algorithme.

2. Procédé selon la revendication 1, **caractérisé en ce que** la base de décomposition est choisie dans une table mémorisée (6) d'ensembles de nombres ou de polynômes premiers entre eux.

3. Procédé selon la revendication 2, **caractérisé en ce que** l'ensemble de nombres ou de polynômes premiers entre eux, servant à la décomposition par système de résidus, est choisi aléatoirement dans la table mémorisée (6), à chaque nouvelle application de l'algorithme (1).

4. Procédé selon la revendication 1, **caractérisé en ce que** la base de décomposition est calculée par un générateur pseudo-aléatoire.

5. Procédé selon l'une quelconque des revendications 1 à 4, **caractérisé en ce que** la base est choisie pour être compatible avec les longueurs des nombres ou polynômes traités par l'algorithme.

6. Procédé selon l'une quelconque des revendications 1 à 5, **caractérisé en ce qu'**il est appliqué à des données d'entrée déjà décomposées par un système de résidus dans une base d'origine, les données d'entrées subissant un changement (2, 3) de base de décomposition et le résultat fourni par l'algorithme (1) subissant, de préférence, une transformation inverse (4) vers ladite base d'origine.

7. Procédé selon l'une quelconque des revendications 1 à 5, **caractérisé en ce qu'**il est appliqué à des données d'entrée non encore décomposées.

8. Procédé selon l'une quelconque des revendications 1 à 7, **caractérisé en ce qu'**un ou plusieurs changements de base de décomposition sont effectués pendant l'exécution de l'algorithme (1).

9. Circuit de traitement algorithmique et de masquage de données décomposées par un système de résidus à partir d'une base finie de nombres ou de polynômes premiers entre eux, **caractérisé en ce qu'**il comporte un circuit (5) de sélection ou de génération, et de mémorisation temporaire de ladite base.

10. Circuit selon la revendication 9, **caractérisé en ce qu'**il comporte un élément (6) de stockage d'une table de bases de nombres ou de polynômes premiers entre eux, ledit circuit de sélection (5) choisissant, à chaque application de l'algorithme, une base dans ladite table.

**11.** Circuit selon la revendication 9 ou 10, **caractérisé en ce qu'**il comporte un élément de vérification de conformité, entre la base sélectionnée pour application des décompositions par système de résidus et les circuits (1) de calculs du circuit exécutant l'algorithme.

**Claims**

**1.** A method for masking digital data handled by an algorithm (1) and factorized by a residue number system based on a finite base of numbers or polynomials prime to one another, **characterized in that** it comprises a step of modification of the data factorization base in the residue system from one execution of the algorithm to another one.

**2.** The method of claim 1, **characterized in that** the factorization base is chosen from a look-up table (6) of sets of numbers or polynomials prime to one another.

**3.** The method of claim 2, **characterized in that** the set of numbers or polynomials prime to one another used for the factorization by residue number system is randomly selected from the look-up table (6), for each new application of the algorithm (1) .

**4.** The method of claim 1, **characterized in that** the factorization base is calculated by a pseudo-random generator.

**5.** The method of any of claims 1 to 4, **characterized in that** the base is chosen to be compatible with the lengths of the numbers or polynomials processed by the algorithm.

**6.** The method of any of claims 1 to 5 **characterized in that** it is applied to input data already factorized by a residue number system in an original base, the input data undergoing a factorization base change (2, 3) and the result provided by the algorithm (1) undergoing, preferably, an inverse transformation (4) towards said original base.

**7.** The method of any of claims 1 to 5, **characterized in that** it is applied to input data not yet factorized.

**8.** The method of any of claims 1 to 7, **characterized in that** one or several factorization base changes are performed during the execution of the algorithm (1).

**9.** A circuit of algorithmic processing and masking of data factorized by a residue number system based on a finite base of numbers or polynomials prime to one another, **characterized in that** it comprises a circuit (5) of selection or generation and of temporary storage of said base.

**10.** The circuit of claim 9, **characterized in that** it comprises an element (6) for storing a table of bases of numbers or polynomials prime to one another, said selection circuit (5) selecting, at each application of the algorithm, a base from said table.

**11.** The circuit of claim 9 or 10, **characterized in that** it comprises an element for checking the conformity between the base selected for application of the factorizations by residue number system and the calculation circuits (1) of the circuit executing the algorithm.

**Patentansprüche**

**1.** Ein Verfahren zum Maskieren digitaler Daten, die gehandhabt werden durch einen Algorithmus (1) und die faktorisiert werden durch ein Restklassensystem (residue number system) basierend auf einer finiten bzw. endlichen Basis mit Klassen bzw. Zahlen oder Polynomen, die zueinander prim sind, wobei das Verfahren **dadurch gekennzeichnet ist, dass** es einen Schritt der Modifikation der Datenfaktorisierungsbasis in dem Restsystem aufweist, und zwar von einer Ausführung des Algorithmus zu einer anderen

**2.** Verfahren nach Anspruch 1, **dadurch gekennzeichnet, dass** die Faktorisierungsbasis aus einer Nachschlagtabelle (look-up table) (6) mit Sätzen mit Klassen bzw. Zahlen oder Polynomen, die prim zueinander sind, gewählt wird

**3.** Verfahren nach Anspruch 2, **dadurch gekennzeichnet, dass** der Satz mit Klassen bzw Zahlen oder Polynomen, die prim zueinander sind, der für die Faktorisierung durch das Restklassensystem genutzt wird, zufällig aus der Nachschlagtabelle (6) ausgewählt wird, und zwar für jede neue Anwendung des Algorithmus (1)

**4.** Verfahren nach Anspruch 1, **dadurch gekennzeichnet, dass** die Faktorisierungsbasis durch einen Pseudo-Rausch-Generator berechnet wird.

**5.** Verfahren nach irgendeinem der Ansprüche 1 bis 4, **dadurch gekennzeichnet, dass** die Basis so gewählt wird, dass sie kompatibel mit den Längen der Zahlen oder Polynome ist, die durch den Algorithmus verarbeitet werden

**6.** Verfahren nach irgendeinem der Ansprüche 1 bis 5, **dadurch gekennzeichnet, dass** es auf Eingangsdaten angewendet wird, die bereits mit einem Restklassensystem mit einer originalen Basis faktorisiert sind, wobei die Eingangsdaten einer Faktorisierungsbasisänderung (2, 3) unterzogen werden, und das durch den Algorithmus (1) vorgesehene Ergebnis vorzugsweise einer inversen Transformation (4) hin zu der genannten originalen Basis unterzogen wird

**7.** Verfahren nach irgendeinem der Ansprüche 1 bis 5, **dadurch gekennzeichnet, dass** es auf Eingangsdaten angewendet wird, die noch nicht faktorisiert sind

**8.** Verfahren nach irgendeinem der Ansprüche 1 bis 7, **dadurch gekennzeichnet, dass** eine oder mehrere Faktorisierungsbasisänderungen während der Ausführung des Algorithmus (1) durchgeführt werden.

**9.** Ein Schaltkreis zur algorithmischen Verarbeitung und zur Maskierung von Daten, die durch ein Restklassensystem faktorisiert werden und zwar basierend auf einer finiten bzw endlichen Basis mit Klassen bzw, Zahlen oder Polynomen, die zueinander prim sind, und zwar **gekennzeichnet dadurch, dass** er einen Schaltkreis (5) aufweist zur Selektion bzw Auswahl oder Erzeugung und zur temporären Speicherung der genannten Basis.

**10.** Schaltkreis nach Anspruch 9, **dadurch gekennzeichnet, dass** er ein Element (6) zum Speichern einer Tabelle mit Basen von Klassen bzw. Zahlen oder Polynomen, die prim zueinander sind, aufweist, wobei der Selektionsschaltkreis (5) bei jeder Anwendung des Algorithmus eine Basis von der Tabelle selektiert bzw auswählt

**11.** Schaltkreis nach Anspruch 9 oder 10, **gekennzeichnet dadurch, dass** er ein Element aufweist zum Prüfen der Konformität zwischen der Basis, ausgewählt zur Anwendung der Faktorisierungen durch das Restklassensystem und den Berechnungsschaltkreisen (1) von dem Schaltkreis, der den Algorithmus ausführt

x      y

{m1,...mi,...mn}

| BT | | BT |
|---|---|---|
| 2 | | 3 |

SELECT {M}

5

{x1,...xi,...xn}  {y1,...yi,...yn}

| ALGO |
|---|

1

{M}

6

{r1,...ri,...rn}

| IBT |
|---|

4

r

Fig

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5991415 A

**Littérature non-brevet citée dans la description**

- **J.-C. BAJARD ; L.-S. DIDIER ; P. KORNERUP.** Modular multiplication and base extension in residue number systems. *Arith 15, 15ème symposium IEEE sur l'arithmétique informatique,* Juin 2001, 59-65